Europäisches Patentamt

European Patent Office

Office européen des brevets

(19)

(11) Veröffentlichungsnummer: **0 094 001**
**B1**

(12) **EUROPÄISCHE PATENTSCHRIFT**

(45) Veröffentlichungstag der Patentschrift:
**27.08.86**

(51) Int. Cl.⁴: **F 16 D 23/12**

(21) Anmeldenummer: **83104338.5**

(22) Anmeldetag: **03.05.83**

(54) Reibungskupplung für Kraftfahrzeuge.

(30) Priorität: **08.05.82 DE 3217453**

(43) Veröffentlichungstag der Anmeldung:
**16.11.83 Patentblatt 83/46**

(45) Bekanntmachung des Hinweises auf die Patenterteilung:
**27.08.86 Patentblatt 86/35**

(84) Benannte Vertragsstaaten:
**FR GB IT**

(56) Entgegenhaltungen:
**DE - A - 2 935 079**
**DE - C - 3 103 032**

(73) Patentinhaber: **BAYERISCHE MOTOREN WERKE
Aktiengesellschaft, Postfach 40 02 40 Petuelring 130,
D-8000 München 40 (DE)**

(72) Erfinder: **Scherg, Andreas, Dipl.-Ing.,
Karl-Witthalm-Strasse 18/4, D-8000 München 70 (DE)**

(74) Vertreter: **Dexheimer, Rolf, Bayerische Motoren Werke
Aktiengesellschaft Postfach 40 02 40 Petuelring 130 -
AJ-31, D-8000 München 40 (DE)**

## Beschreibung

Die Erfindung bezieht sich auf eine Reibungskupplung für Kraftfahrzeuge, wie sie im Oberbegriff des Hauptanspruchs beschrieben ist.

Bei solchen Reibungskupplungen ist es bekannt, bei der Montage oder Demontage die Ausrückgabel in einer zurückgezogenen Stellung zu halten. Hierfür sieht die [nicht vorveröffentlichte] DE-A 3 103 032 eine Montagespange vor, die die Ausrückgabel in dieser zurückgezogenen Stellung hält. Sobald bei der Montage das Kupplungsgehäuse am Zylinderkurbelgehäuse befestigt ist, wird die Ausrückgabel von aussen durch eine Öffnung in dem Kupplungsgehäuse von der zurückgezogenen Stellung in die eigentliche Betriebsstellung geschoben, in der sie das Ausrücklager hintergreift. Dieser Arbeitsgang muss blind ausgeführt werden. Zur Orientierung wird so vorgegangen, dass das aus dem Gehäuse ragende Gabelende zunächst in Richtung der Wandung der Gehäuseöffnung gedrückt wird, bis es dort anliegt. Dadurch erhält man einen Anlagepunkt, der zusammen mit dem Sitz der Gabel in der Montagespange die Verschieberichtung definiert. Sobald die Gabel aber in diese Richtung bewegt wird, verliert sie ihre Unterstützung durch die Montagespange. Auf dem grössten Teil des Weges ist dadurch die Verschieberichtung nicht mehr bestimmbar.

Es kommt daher immer wieder vor, dass es erst nach mehreren Versuchen gelingt, die Ausrückgabel in ihre richtige Position zu schieben. Das erfordert einen zusätzlichen Zeitaufwand und wirkt sich vor allem in der Grossserienmontage nachteilig aus.

Aufgabe der Erfindung ist es, die Reibungskupplung so zu verbessern, dass sich die Ausrückgabel sicher in ihre Betriebsstellung schieben lässt.

Diese Aufgabe wird erfindungsgemäss mit den Merkmalen des Hauptanspruchs gelöst. Ausgestaltungen der Erfindung beschreiben die Unteransprüche.

Durch das Führungselement ist die Verschieberichtung der Ausrückgabel während der gesamten Länge des Verschiebungsweges bestimmt. Die Ausrückgabel braucht lediglich an die Wandung der Gehäuseöffnung gedrückt und dann in Richtung Ausrücklager geschoben werden. Dadurch, dass der Auflagepunkt des Gabelendes am Gehäuse während des Verschiebens nach oben wandert, verändert sich die Verschieberichtung stetig. Es ist deshalb vorteilhaft, wenn das Führungselement Ausbauchungen aufweist, auf denen die Ausrückgabel gleitet. Der Auflagepunkt der Gabel wandert dann entsprechend dem unteren Auflagepunkt auf den Ausbauchungen. Ausserdem erhält man durch die Ausbauchungen kleine Berührungsflächen zwischen Ausrückgabel und Führungselement. Weiter erlauben die Ausbauchungen mehr Gestaltungsfreiheit bei dem Gehäuse und vor allem bei der Ausrückgabel.

Ein Führungselement mit Ausbauchungen lässt sich in vorteilhafter Weise aus einer Blattfeder herstellen, die U-förmig gestaltet ist und deren U-Schenkel zu eben diesen Ausbauchungen gebogen sind. Dabei können sich die Ausbauchungen über die ganze Schenkellänge oder nur über einen Teil erstrecken. Durch die Blattfeder wird die ganze Führung in sich elastisch mit dem Vorteil, dass die Ausrückgabel während des Verschiebens in die richtige Lage gedrückt werden kann, sofern wegen Fertigungstoleranzen dies notwendig werden sollte. Um die Führung aber dennoch in sich stabil zu machen, ist es weiter vorteilhaft, wenn sich die freien Enden der U-Schenkel am Gehäuse abstützen.

Nachfolgend ist ein vorteilhaftes Ausführungsbeispiel beschrieben und in der Zeichnung dargestellt. Die Zeichnung zeigt in

Fig. 1 einen Teil einer Reibungskupplung;
Fig. 2 eine Vorderansicht eines Gleitelements; und
Fig. 3 eine Seitenansicht nach Fig. 2.

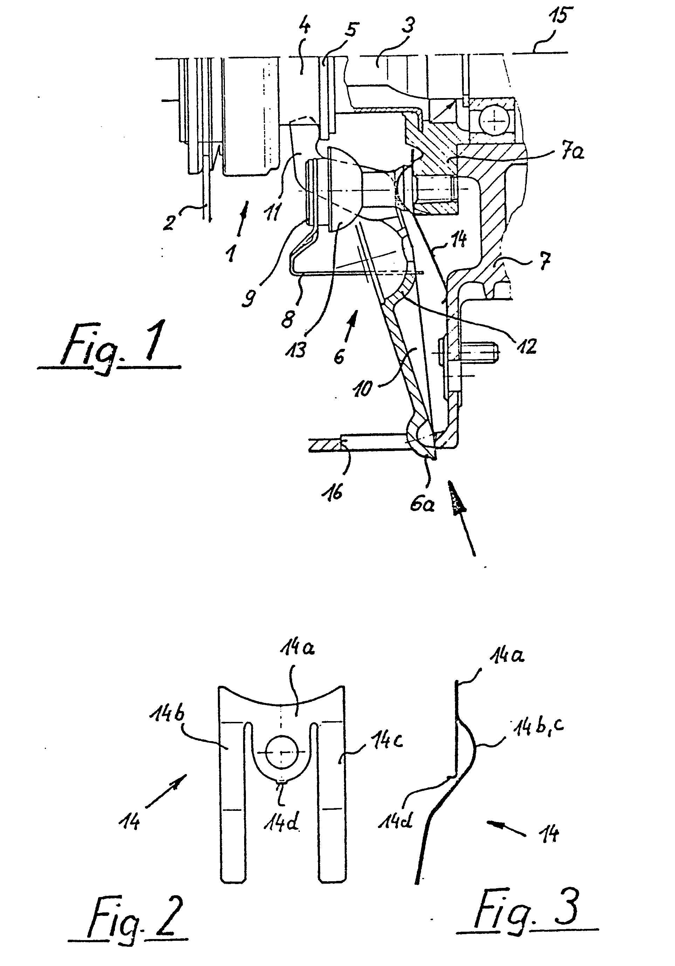

Fig. 1 lässt ein Ausrücklager 1 erkennen, das an einer Tellerfeder 2 vorgesehen ist. Ausrücklager 1 und Tellerfeder 2 sind Teil einer üblichen Reibungskupplung für Kraftfahrzeuge mit mindestens einer Reibscheibe, die durch die Tellerfeder 2 und über eine Druckplatte gegen ein Schwungrad des Motors gepresst wird. Die Reibscheibe, die Druckplatte und das Schwungrad sind der Einfachheit halber in Fig. 1 weggelassen. Das Ausrücklager 1 umgibt konzentrisch und mit Abstand eine Getriebewelle 3, auf der die Reibscheibe verdrehfest, jedoch axial verschiebbar gelagert ist.

Wie allgemein bekannt, besteht das Ausrücklager aus einem umlaufenden Lagerring, an dem die Tellerfeder 2 angebracht ist, und aus einem nicht umlaufenden Lagerring, an dem die Betätigungsmittel für das Lösen der Reibungskupplung angreifen. Zu diesem Zweck geht der nichtumlaufende Lagerring in einen zylindrischen Abschnitt 4 über, der durch einen Ringbund 5 getriebeseitig abgeschlossen ist.

Eine Ausrückgabel 6 sitzt in einem Gehäuse 7, das im fertigmontierten Zustand die Reibungskupplung umgibt und mit dem nicht dargestellten Zylinderkurbelgehäuse verschraubt ist. Das Gehäuse 7 kann entweder ein separates Kupplungsgehäuse sein oder ein verlängerter Abschnitt des Getriebegehäuses. Die Ausrückgabel 6 ist verschiebbar in einer Montagespange 8 unterhalb des Ausrücklagers 1 gehalten. Die Montagespange 8 hängt mit einer Öse in der Nut eines Lagerbolzens 9, der wiederum in einem gehäusefesten Teil 7a eingeschraubt ist.

Die Ausrückgabel 6 besteht aus einem länglichen Guss- oder Blechteil, dessen beiden längeren Seiten U-förmig in Richtung des Gehäuses 7 zu Seitenflächen 10 abgebogen sind. An ihrem zum Ausrücklager 1 hin weisenden Abschnitt öffnet sich die Ausrückgabel 6 zu einer Gabel mit den Gabelarmen 11 (in Fig. 1 ist wegen der Seitenansicht der Ausrückgabel 6 nur einer der beiden Gabelarme erkennbar). Der Gabelöffnung nachgeordnet, weist die Ausrückgabel 6 etwa in ihrem mittleren Bereich eine kugelpfannenförmige Lagerstelle 12 auf. Als Gegenstück zu dieser Lagerstelle 12 ist zwischen der Montagespange 8 und dem Gehäuse 7 am Lagerbolzen 9 ein Halbkugelkopf 13 vorgesehen.

Ein Führungselement 14 ist zwischen der Ausrückgabel 6 und dem Gehäuse 7 bzw. dessen Einschraubteil 7a für den Lagerbolzen 9 angeordnet. Die Form des Führungselements 14 zeigen die Fig. 2 und 3. Danach besteht das Führungselement 14 aus einer etwa U-förmig gestalteten Blattfeder. Die U-Schenkel sind von der U-Basis 14a bis etwa zur Hälfte ihrer Länge zu gleichsinnigen Ausbauchungen 14b, 14c gebogen. Die U-Basis 14a geht in eine gelochte Befestigungslasche über, die sich in Richtung der U-Schenkel erstreckt und mit einer rechtwinklig abgebogenen Lasche 14d abschliesst.

Das Führungselement 14 ist über seine gelochte Befestigungslasche durch den Lagerbolzen 9 an dem gehäusefesten Teil 7a festgelegt. Dabei stützen sich die freien Enden der U-Schenkel am Gehäuse 7 ab. Weiter greift die Lasche 14d in eine entsprechende Ausnehmung im gehäusefesten Teil 7a und verhindert so ein Verdrehen des Führungselements 14. An den Ausbauchungen 14b, c stützen sich die Seitenflächen 10 der Ausrückgabel 6 in Axialrichtung der Kupplung ab; die Axialrichtung ist durch die Achse 15 gegeben. Dabei entspricht der parallele Abstand der Ausbauchungen 14b, c dem parallelen Abstand der Seitenflächen 10, so dass diese mit ihren Stirnseiten wie Kufen auf den Ausbauchungen gleiten können.

Wie eingangs dargestellt, lässt sich die Ausrückgabel 6 in ihrer Längsrichtung von einer zurückgezogenen Montagestellung in ihre Betriebsstellung verschieben. In Fig. 1 befindet sie sich zwischen den beiden Stellungen.

Beim Zusammenbau wird zunächst die Reibungskupplung mit ihren Teilen – Reibscheibe, Druckplatte, Tellerfeder und Ausrücklager – am Motor vormontiert. Die Ausrückgabel 6 sitzt im Gehäuse 7 in ihrer zurückgezogenen Montagestellung. Dabei ragt ihr Ende 6a durch eine Öffnung 16 des Gehäuses 7. Das Gehäuse 7 wird nun mit dem Motorblock zusammengefahren und verschraubt. Sodann wird die Ausrückgabel in ihre Betriebsstellung geschoben. Das geschieht dadurch, dass ihr Ende 6a an die Wandung der Gehäuseöffnung 16 gedrückt und dann nach oben – in Pfeilrichtung – geschoben wird. Während dieses Einschiebens gleitet die Ausrückgabel 6 auf den Ausbauchungen 14b, c des Führungselements 14. In der Betriebsstellung liegt die Lagerstelle 12 am Halbkugelkopf 13 des Lagerbolzens 9, und die Gabelarme 11 umfassen den zylindrischen Abschnitt 4 des Ausrücklagers 1 halbkreisförmig. Als letzter Arbeitsschritt wird ein nicht näher dargestellter Nehmerzylinder eingesetzt und die Gehäuseöffnung 16 mit einem Deckel verschlossen.

Bei der Demontage der Reibungskupplung wird in genau umgekehrter Reihenfolge vorgegangen.

Beim Lösen der Reibungskupplung im Fahrbetrieb bewegt der Nehmerzylinder, der über ein Kupplungspedal beaufschlagt wird, das Gabelende 6a in Richtung Motor. Wegen seiner Lagerung am Lagerbolzen 9 wirkt die Ausrückgabel 6 als zweiseitiger Hebel. Die Gabelarme 11 drücken dadurch auf den Ringbund 5 und lösen über das Ausrücklager 1 die Kupplung.

## Patentansprüche

1. Reibungskupplung für Kraftfahrzeuge, die motorseitig vormontiert ist, mit mindestens einer Reibscheibe, die durch eine Tellerfeder (2) und über eine Druckplatte gegen ein Schwungrad gepresst wird, mit einem an der Tellerfeder (2) vorgesehenen Ausrücklager (1), das an seinem der Tellerfeder (2) abgewandten Abschnitt (4) Mittel für den Eingriff einer Ausrückgabel (6) aufweist, wobei die Ausrückgabel (6) in einem die Reibungskupplung umgebenden Gehäuse (7) angeordnet und in ihrer Längsrichtung verschiebbar ist in eine Betriebsstellung, bei der sie das Ausrücklager (1) umgreift und in eine Montagestellung, bei der das Gehäuse (7) und die Reibungskupplung montier- bzw. demontierbar sind und wobei in dem Gehäuse (7) eine Montagespange (8) angeordnet ist, in der die Ausrückgabel (6) verschiebbar ist und die beim Montieren und Demontieren des Gehäuses (7) die Ausrückgabel (6) in einer gegenüber dem Ausrücklager (1) zurückgezogenen Montagestellung hält, dadurch gekennzeichnet, dass in dem Gehäuse (7) ein Führungselement (14) vorgesehen ist, das während des Einschiebens in die Betriebsstellung die Ausrückgabel (6) in Axialrichtung der Kupplung abstützt.

2. Reibungskupplung nach Anspruch 1, dadurch gekennzeichnet, dass das Führungselement (14) aus einer etwa U-förmig gestalteten Blattfeder besteht, bei der die U-Schenkel wenigstens auf einem Teil ihrer Länge zu gleichsinnigen Ausbauchungen (14b, 14c) gebogen sind und bei der die U-Basis (14a) in eine Befestigungslasche übergeht, die sich in Richtung der U-Schenkel erstreckt.

3. Reibungskupplung nach Anspruch 2, bei der im Gehäuse (7) ein Lagerbolzen (9) für die Ausrückgabel (6) angeordnet ist, dadurch gekennzeichnet, dass das Führungselement (14) über seine Befestigungslasche (14d) durch den Lagerbolzen (9) am Gehäuse (7) festgelegt ist und sich mit den freien Enden seiner U-Schenkel am Gehäuse (7) abstützt.

## Revendications

1. Embrayage à friction pour véhicules automobiles, qui est monté au préalable à côté du moteur, ayant au moins un disque de friction qui est pressé contre un volant par un ressort à plateau (2) et par l'intermédiaire d'une plaque de pression, avec une butée d'embrayage (1) prévu au niveau du ressort à plateau qui présente, au niveau de son segment (4) opposé au ressort à plateau (2), un moyen pour la prise d'une fourchette d'embrayage (6), la fourchette d'embrayage (6) étant disposée dans un carter entourant l'embrayage à friction et pouvant coulisser dans le sens de sa longueur dans une position de marche à laquelle elle prend la butée d'embrayage (1) et dans une position de montage à laquelle le carter (7) et l'embrayage à friction peuvent être montés ou démontés, et une agrafe de montage (8) étant disposée dans le carter (7), dans laquelle la fourchette d'embrayage (6) peut coulisser et qui, lorsqu'on monte et lorsqu'on démonte le carter (7) maintient la fourchette d'embrayage (6) en une position rétractée de montage, en face de la butée d'embrayage (1) caractérisé par le fait que dans le carter (7) est prévu un élément de guidage (14) qui, pendant l'embrayage dans la position de marche, soutient la fourchette d'embrayage (6) dans la direction axiale de l'embrayage.

2. Embrayage à friction selon la revendication 1, caractérisé par le fait que l'élément de guidage (14) est constitué d'un ressort à lame de forme approximativement en U, dans lequel les branches de l'U sont recourbées, au moins sur une partie de leur longueur, en parties bombées dans le même sens (14b, 14c) et dans lesquelles la base de l'U (14a) passe dans une languette de fixation qui s'avance en direction des branches de l'U.

3. Embrayage à friction selon la revendication 2, dans lequel est disposé dans le carter (7) un goujon de butée (9) pour la fourchette d'embrayage (6), caractérisé par le fait que l'élément de guidage (14) est fixé au carter (7) par sa languette de fixation (14d) à travers le goujon de butée (9) et qu'il s'appuie au carter (7) par les extrémités libres de ses branches d'U.

**Claims**

1. A friction clutch for motor vehicles which is prefitted on the engine, with at least one friction disc which is pressed against a fly-wheel through a thrust plate by a dished spring (2), and with a releaser bearing (1) provided on the dished spring (2) and comprising means on its section (4) remote from the dished spring (2) for the engagement of a releaser fork (6), the releaser fork (6) being arranged in a housing (7) surrounding the friction clutch and being displaceable in its longitudinal direction into an operating position in which it grasps around the releaser bearing (1) and into an assembly position in which the housing (7) and the friction clutch are fittable and dismantleable, while in the housing (7) an assembly clip (8) is arranged in which the releaser fork (6) is displaceable and which holds the releaser fork (6) in an assembly position retracted in relation to the releaser bearing (1) during fitting and dismantlement of the housing (7), characterised in that in the housing (7) there is provided a guide element (14) which supports the releaser fork (6) in the axial direction of the clutch during pushing into the operating position.

2. A friction clutch according to Claim 1, characterised in that the guide element (14) comprises a leaf spring of generally U-shaped configuration in which the U-legs are bent over at least a part of their length into outward bulges (14b, 14c) in the same direction and in which the base (14a) of the U merges into a securing tab extending in the direction of the U-legs.

3. A friction clutch according to Claim 2, wherein a bearing bolt (9) for the releaser fork (6) is arranged in the housing (7), characterised in that the guide element (14) is made fast on the housing (7) by the bearing bolt (9) by means of its securing tab (14d) and bears with the free ends of its U-legs on the housing (7).

_Fig. 1_

_Fig. 2_

_Fig. 3_